# EUROPÄISCHE PATENTSCHRIFT

(11) **EP 0 773 658 B1**
(45) Veröffentlichungstag und Bekanntmachung des Hinweises auf die Patenterteilung: **11.10.2006**
(21) Anmeldenummer: 96103263.8
(22) Anmeldetag: 02.03.1996
(51) Int. Cl.: H04M 3/38, H04M 15/00, H04M 3/48

(54) **Verfahren und Vorrichtung zum universellen und gesicherten Zugang zum Telefonnetz**
Method and apparatus for universal and secure access to the telephone network
Méthode et dispositif pour l'accès universel et sécurisé au réseau téléphonique

(30) Priorität: 11.11.1995 DE 19542145
(43) Veröffentlichungstag der Anmeldung: 14.05.1997
(73) Patentinhaber: Deutsche Telekom AG, 53113 Bonn (DE)
(72) Erfinder: Trabold, Hans, 64673 Zwingenberg (DE); Tönsing, Friedrich, Dr.rer.nat., 64739 Höchst-Annelsbach (DE); Scheerhorn, Alfred, Dr.-Ing., 64293 Darmstadt (DE); Korst, Uwe K.H., 64625 Bensheim (DE); Schaefer-Lorinser, Dr.rer.nat., 64372 Ober-Ramstadt (DE)

(56) Entgegenhaltungen:
- EP-A- 0 725 524
- CA-A- 2 140 564
- DE-A- 19 652 092
- US-A- 4 680 785
- PATENT ABSTRACTS OF JAPAN vol. 1996, no. 10, 31. Oktober 1996 (1996-10-31) & JP 08 168080 A (TSUNODA AKIHIKO), 25. Juni 1996 (1996-06-25)
- PATENT ABSTRACTS OF JAPAN vol. 005, no. 055 (E-052), 16. April 1981 (1981-04-16) & JP 56 007537 A (NIPPON TELEGR & TELEPH CORP), 26. Januar 1981 (1981-01-26)

## Beschreibung

Die Erfindung betrifft ein Verfahren und eine Vorrichtung zum universellen und gesicherten Zugang zum Telefonnetz bei mobiler Erreichbarkeit des Anwenders nach dem Oberbegriff des Patentanspruchs 1 bzw. Patentanspruchs 8.

Unter der Bezeichnung Virtual Calling Card (VCC) ist in den USA ein Dienst eingeführt worden, der es dem Kunden ermöglicht, durch Angabe einer Zugangskennung in Verbindung mit einer PIN (Personal Identification Number), von jedem beliebigen Telefon aus zu telefonieren; die Gebührenabrechnung erfolgt dabei über ein dem Kunden zugeordnetes, Konto. Dieser Dienst gewinnt zunehmend auch in Europa an Bedeutung. So ist zum Beispiel in "Deutsche Telekom AG-Vision", Heft Februar 1995, Seiten 44 und 45, die T-Card mit Connect-Service der Deutschen Telekom beschrieben. In diesem Artikel ist ausgeführt, daß sich das Leistungsspektrum von der Telefonkarte bis hin zur Kreditkarte erstreckt und sich vor allem an Geschäftsreisende, Vieltelefonierer und Touristen wendet, die im Ausland telefonieren wollen, oder vom Ausland aus Deutschland erreichen möchten. Dieses sprachgesteuerte Dialogsystem führt den Kunden wahlweise in deutscher, englischer oder französischer Sprache zur gewünschten Anwendung. Diese Lösung hat jedoch noch folgende Nachteile:
1. Die manuelle Eingabe der Kundennummer und der zugehörigen PIN machen den Dienst benutzerunfreundlich. Eine Spracheingabe ist fehleranfällig und daher auch nicht benutzerfreundlich.
oder französische Sprache zur gewünschten Anwendung.

Diese Lösung hat jedoch noch folgende Nachteile:
1. Die manuelle Eingabe der Kundennummer und der dazugehörigen PIN machen den Dienst benutzerunfreundlich. Eine Spracheingabe ist fehleranfällig und daher auch nicht benutzerfreundlich.
2. Der Zugangsschutz durch die PIN ähnelt einem Passwortverfahren bei Rechnern und ist als sicherheitskritisch bekannt. Unter anderem bietet er keinen Schutz gegen einen Replayangriff, d.h. gegen eine Verwendung exakt der gleichen Daten durch einen Unberechtigten.
3. Im Vergleich zum noch nicht realisierten Dienst "Universal Personal Telecommunication" bietet die VCC zwar einen universellen Netzzugangsmechanismus, jedoch ist in keiner Weise ein Erreichbarkeitsmechanismus vorgesehen.

Aus der CA-A-2140564 ist die Verwendung von Telekommunikationsendgeräten mit speziellen Zugangsmodulen bekannt, die zum Auslesen von PINs, Passwörtern oder Zugangscodes aus Smart cards vorgesehen sind. Dies ermöglicht zwar einen sehr sicheren Zugang zu einem Telekommunikationsnetz, erfordert jedoch die Verwendung von speziell vorbereiteten Telekommunikationsendgeräten. Mit herkömmlichen Standard-Telekommunikationsendgeräten funktioniert das aus diesem Dokument bekannte Verfahren bzw. die entsprechende Vorrichtung nicht.

Der Erfindung liegt daher die Aufgabe zu Grunde, ein Verfahren und eine Vorrichtung zum universellen und gesicherten Zugang zum Telefonnetz bei mobiler Erreichbarkeit des Anwenders zu schaffen, die keine speziellen Telekommunikationsendgeräte erfordern, einen viel höheren Sicherheitsstandard aufweisen als die bisher bekannten Verfahren und dabei trotzdem vom Anwender leicht zu bedienen sind.

Die Lösung für das erfindungsgemäße Verfahren ist im Kennzeichen des Patentanspruchs 1 beschrieben, die Vereinfachung der Eingabe bei der Verwendung des Mehrfrequenzwahlverfahrens bietet sich hier ein DTMF (Dual Tone Multiple Frequency)-Gerät an. Das ist eine kleine Schaltungseinheit oder ein kleines Gerät, das die Daten im Mehrfrequenzverfahren überträgt. Durch eine zusätzliche Ausstattung dieses Gerätes wird eine komfortable Funktionalität erreicht. In diesem Gerät ist zum Beispiel ein Rufnummernspeicher vorgesehen, so daß "auf Knopfdruck" alle notwendigen Daten mittels DTMF automatisch gesendet werden.
2. Eine automatisierte Datenübertragung ist zum Beispiel mittels DTMF realisiert, wodurch sich die Sicherheit des Netzzugangs dadurch erhöhen läßt, daß anstelle der PIN ein unidirektionales, kryptographisch sicheres Authentikationsverfahren verwendet wird. Diese Verfahren bieten durch einen ständig wechselnden Identifizierungscode und eine, im Vergleich zur PIN, erheblich höhere Anzahl von Kombinationen, ein wesentlich höheres Sicherheitsniveau.
3. Um die Funktionalität des Verfahrens und der Vorrichtung um eine "universelle" Erreichbarkeit zu erweitern, werden sie vorteilhafterweise mit einem lokalen, nationalen oder auch internationalen Funkruf kombiniert, das heißt in der Vorrichtung ist dann zusätzlich ein Funkrufempfänger integriert. Dies ist technisch auf kleinstem Raum ohne weiteres in integrierter Technik realisierbar.

Durch die Kombination der genannten Verbesserungen des VCC-Dienstes ist eine Fülle neuer komfortabler Funktionalitäten denkbar:

In der erfindungsgemäßen Vorrichtung können zum Beispiel Auswahlnummern des VCC-Dienstes für verschiedene Länder gespeichert sein. Bei Anwendungen im Ausland muß der Benutzer an der erfindungsgemäßen Vorrichtung bzw. an dem Gerät lediglich eingeben, in welchem Land er sich befindet.

Die Vorrichtung ist mit einer Funktion versehen, die es erlaubt, automatisch eine per Funkruf empfangene Rufnummer über DTMF anzuwählen. Das heißt ein A-Teilnehmer könnte die Telefonnummer, unter der er erreichbar ist, per Funkruf an den B-Teilnehmer, der mit einer erfindungsgemäßen Vorrichtung ausgestattet ist, senden, worauf B "per Knopfdruck" einen Rückruf an die zuvor empfangene Rufnummer mit seiner erfindungsgemäßen Vorrichtung durchführt. Dabei überträgt die erfindungsgemäße Vorrichtung automatisch alle notwendigen Daten inklusive der empfangenen Telefonnummer mittels DTMF.

Diese Funktionalität kann nun insoweit noch erweitert werden, daß der A-Teilnehmer, der den B-Teilnehmer per Funkruf zu einem Rückruf aufgefordert hat, die Kosten des Rückrufs übernimmt. Hier sind folgende Szenarien denkbar:
- Der A-Teilnehmer wählt die individuelle Funkrufnummer des B-Teilnehmers und wird mit einem nicht dargestellten Server verbunden. Der Server unterbricht die Verbindung zu A und setzt einen Funkruf an B ab. Falls B innerhalb eines vorgegebenen Zeitraumes bzw. -fensters den Server zurückruft, initiiert der Server ein R-Gespräch mit A, das heißt A trägt die Kosten des Gesprächs.
- Der A-Teilnehmer wählt die individuelle Funkrufnummer des B-Teilnehmers und wird mit einem Server verbunden. Der Server setzt A auf Halten ("Call Hold") und signalisiert B durch den Funkruf, daß A "online" auf einen Rückruf wartet.
   (a) Falls der B-Teilnehmer den Server mittels VCC zurückruft, solange A die Verbindung mit dem Server aufrecht erhält, verbindet der Server A- und B-Teilnehmer. A trägt die Kosten des Gesprächs.
   (b) Falls Teilnehmer A die Verbindung zum Server vor einem Rückruf von Teilnehmer B unterbricht, initiiert der Server ein R-Gespräch mit A, sofern B innerhalb eines vorgegebenen Zeitraumes bzw. -fensters den Server zurückruft, und A trägt die Kosten des Gesprächs.
   (c) Falls Teilnehmer B nicht innerhalb eines gegebenen Zeitraumes antwortet, spricht Teilnehmer A seine Nachricht in eine Sprach-Mailbox, die später von B auf eigene Kosten mit Hilfe des Zugangs durch die erfindungsgemäße Vorrichtung, auch verbesserte VCC im folgenden genannt, abgehört werden kann.

Wesentlich für alle weiteren möglichen varianten ist die erhöhte Sicherheit bei hohem Bedienungskomfort und die zusätzliche Kombination mit der Funkruffunktionalität.

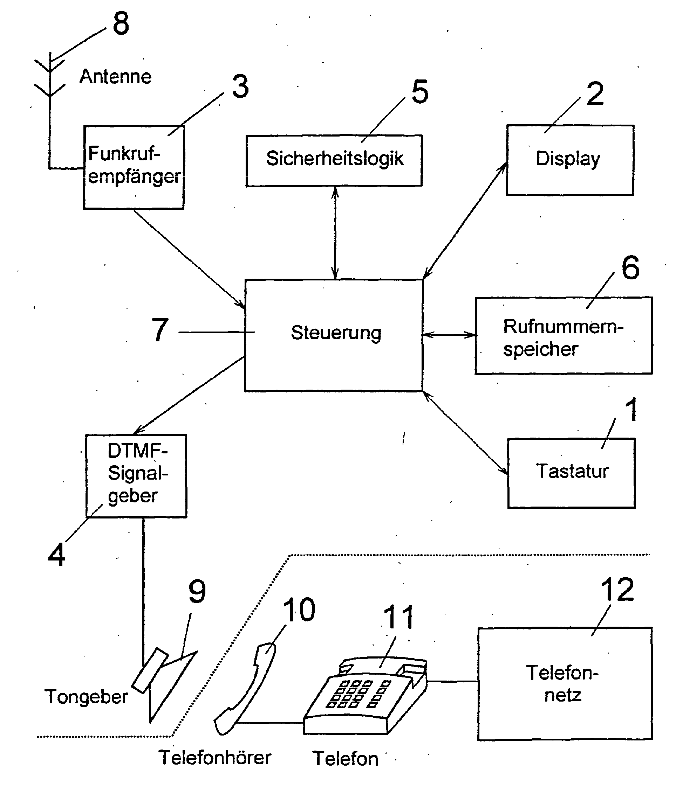

Die Erfindung wird nun anhand von Ausführungsbeispielen näher beschrieben. Dazu dient auch das in der Zeichnung dargestellte Ausführungsbeispiel.

Das in der Zeichnung als Blockschaltbild prinzipiell dargestellte Gerät bzw. die erfindungsgemäße Vorrichtung 1 - 9 hat die Größe eines kleinen Taschenrechners bzw. einer etwas dickeren bekannten Chipkarte oder einer Armbanduhr. Sie bestehen aus einer integrierten Tastatur 1 und Anzeige 2, einem Funkempfänger 3 (zum Beispiel den Funkrufdienst Scall der Deutschen Telekom), einem DTMF-Signalgeber 4, einer Sicherheitslogik 5, einem Rufnummernspeicher 6 und einem Prozessor 7 mit Software zur Steuerung der genannten Komponenten. Außerdem besitzt der Funkrufempfänger 3 noch eine Antenne 8 zum Empfang der Funkrufsignale und der DTMF-Signalgeber 4 einen Tongeber 9 zum Koppeln mit der Sprechmuschel eines normalen Telefonhörers 10, der seinerseits über das Telefon 11 mit dem Telefonnetz 12 verbunden ist. Die Sicherheitslogik 5 ist entweder in die Vorrichtung zum universellen und kryptologisch gesicherten Zugang zum Telefonnetz voll integriert oder in Form eines "Plug-In" oder einer Chipkarte ausgeführt, in der je nach Ausführungsform auch der Authentikationsalgorithmus enthalten ist.

Eine verbesserte VCC hat wie bereits ausgeführt, die Form eines Gerätes in der Größe eines kleinen Taschenrechners, einer etwas dickeren Chipkarte oder dergleichen mit integrierter Tastatur 1 und Anzeige oder Display 2. Diese VCC enthält auch einen Funkrufempfänger 3 (zum Beispiel Scall), einen DTMF-Signalgeber 4 mit Tongeber 9, eine Sicherheitslogik 5, Rufnummernspeicher 6 und einen Prozessor 7 mit Software zur Steuerung der genannten Peripherie.

Die Vorrichtung 1 - 9 gemäß der Darstellung ist personalisiert, das heißt in ihr ist eine ihr eindeutig zugeordnete Kennung (zum Beispiel Kundennummer) gespeichert, zusammen mit einem der Kennung zugeordneten geheimen Schlüssel. Dieser Schlüssel muß so gespeichert sein, daß ein Benutzer des Gerätes, auch bei einem Mißbrauchsversuch, keine Möglichkeit hat, diesen Schlüssel auszulesen. Lediglich der Authentikationsalgorithmus muß über die interne Logik auf den Schlüssel zugreifen dürfen. Dies wird dadurch realisiert, daß Kennung und Schlüssel auf einer PIN-geschützten Sicherheitslogik 5, in Form eines "Plug-In" bzw. eines steckbaren Chips oder einer Chipkarte, gespeichert sind, die jeweils auch den Authentikationsalgorithmus enthalten.

Der Kunde identifiziert sich gegenüber der verbesserten VCC durch Eingabe einer PIN, die er selbst verändern kann (wie bei Mobiltelefonen).

Der übliche Ablauf eines Anrufes gestaltet sich dann so, daß der Kunde über die Tastatur 1 die gewünschte Rufnummer eingibt oder eine gespeicherte Nummer abruft, die verbesserte VCC an die Sprechmuschel des Telefonhörers 10 des Telefons 11 hält und den Wahlvorgang startet. Die verbesserte VCC wählt dann über DTMF automatisch den nicht dargestellten VCC-Server des Telefonnetzes 12, ihre Zugangskennung, den Authentifikator und die gewünschte Rufnummer, so daß ohne weitere Aktionen des Benutzers die gewünschte Verbindung aufgebaut wird. Der Authentifikator wird durch den Authentikationsalgorithmus berechnet und ist abhängig von dem geheimen Schlüssel und einem internen Zustand der verbesserten VCC, der sich nach jeder Benutzung ändert. Diese Änderung kann entweder deterministisch durch einen Algorithmus erfolgen oder auch zeitabhängig sein in Verbindung mit einer in der verbesserten VCC integrierten Zeitmessung.

Nach dem Empfang eines Funkrufs erscheint auf dem Display 2 der verbesserten VCC die Funkrufmeldung. Hierbei kann es sich um eine Telefonnummer handeln, die zurückgerufen werden soll. In diesem Fall kann der Benutzer der verbesserten VCC am nächsten Telefon auf Knopfdruck den Rückruf initiieren. Dabei überträgt die verbesserte VCC alle notwendigen Signale inklusive der Rückrufnummer automatisch über DTMF.

## Patentansprüche

1. Verfahren zum universellen und gesicherten Zugang zum Telefonnetz bei mobiler Erreichbarkeit des jeweiligen Anwenders unter Verwendung von Standard-Telefonanschlüssen,
**dadurch gekennzeichnet, dass**
der Zugang mittels einer Vorrichtung erfolgt, die Zugangsdaten kryptographisch mit einem unidirektionalen Authentifikationsalgorithmus gesichert mittels Mehrfrequenz-Verfahren an ein Telekommunikationsendgerät an einem Standard-Telefonanschluss überträgt, und dass der jeweils persönliche und geheime Schlüssel, der für den Authentifikationsalgorithmus verwendet wird, in der Vorrichtung verwahrt wird.

2. Verfahren nach Patentanspruch 1, **dadurch**
**gekennzeichnet,**
**daß** eine Vorrichtung (1 - 9) zum universellen, kryptographisch gesicherten Zugang zum Telefonnetz (12) über einen integrierten Funkrufempfänger (3) mit einem lokalen, nationalen oder internationalen Funkrufdienst über eine interne Prozessorsteuerung (7) und einen integrierten DTMF-Signalgeber (4) verbunden wird.

3. Verfahren nach Patentanspruch 1 oder 2, **dadurch**
**gekennzeichnet,**
**daß** durch einfachen Tastendruck eine durch Funkruf angerufene Vorrichtung (1 - 9) einen Rückruf initiiert.

4. Verfahren nach einem der Patentansprüche 1 bis 3,
**dadurch gekennzeichnet,**
**daß** der Initiator des Funkrufs mit einem Server verbunden wird, der die Verbindung zum Initiator daraufhin zunächst unterbricht, einen Funkruf zur gerufenen Vorrichtung (1 - 9) absetzt und eine Gesprächsverbindung zwischen dem gerufenen Gerät und dem dem Initiator zugeordneten Netzzugangsgerät bzw. den entsprechenden Teilnehmern herstellt, wenn sich der gerufene Teilnehmer innerhalb eines vorgegebenen Zeitfensters bzw. -raumes meldet, wobei dem initiierenden Teilnehmer die Kosten für das Gespräch zugeordnet werden.

5. Verfahren nach einem der Patentansprüche 2 bis 4,
**dadurch gekennzeichnet,**
**daß** der Initiator des Funkrufs mit einem Server verbunden wird, der die Verbindung zum Initiator daraufhin auf Halten setzt und einen Funkruf zur gerufenen Vorrichtung (1 - 9) absetzt, und daß die über Funkruf gerufene Vorrichtung (1 - 9) den Server über den Zugang zurückruft, solange die initiierende Vorrichtung die Verbindung mit dem Server aufrecht erhält, der Server das Netzzugangsgerät des Initiators mit der gerufenen Vorrichtung (1 - 9) verbindet und der Initiator die Verbindungskosten trägt.

6. Verfahren nach Patentanspruch 4, **dadurch**
**gekennzeichnet,**
**daß** die über Funkruf angerufene Vorrichtung (1- 9) den Server über den Zugang zurückruft, nachdem der Initiator die Verbindung mit dem Server abgebrochen hat, jedoch noch innerhalb des vorgegebenen Zeitfensters bzw. -limits, der Server das Netzzugangsgerät des Initiators mit der gerufenen Vorrichtung (1 - 9) verbindet und der Initiator die Verbindungskosten trägt.

7. Verfahren nach einem der Patentansprüche 1 bis 6,
**dadurch gekennzeichnet,**
**daß** die über Funkruf gerufene Vorrichtung (1 - 9) den Server über den Zugang zurückruft, nachdem der Initiator die Verbindung mit dem Server abgebrochen hat und nachdem das vorgegebene Zeitlimit bzw. das -fenster überschritten ist, der Initiator über sein Netzzugangsgerät auf eigene Kosten eine Nachricht in eine Sprach-Mailbox einleitet, die über die Vorrichtung (1 - 9) vom gerufenen Teilnehmer abgehört werden kann.

8. Vorrichtung zum universellen und gesicherten Zugang zum Telefonnetz bei mobiler Erreichbarkeit des Anwenders zur Durchführung der Verfahren nach einem der Ansprüche 1-7, **dadurch gekennzeichnet, dass** eine Tastatur (1) zum Eingeben von Rufnummern, ein Rufnummernspeicher (6) und eine Anzeige (2) angeordnet sind, die mit einem Prozessor (7) zur Steuerung der genannten Komponenten, eines Funkrufempfängers (3), einer Sicherheitslogik (5) und eines Signalgebers (4) zur Datenübertragung mittels Mehrfrequenz-Verfahren, zum Beispiel DTMF, verbunden sind, und dass diese als eigenständiges Gerät ausgelegt ist, das mit der Sprechmuschel eines normalen Telefonhörers koppelbar ist, um Zugangsdaten mit einem Telefonnetz unter Verwendung von Standard-Telefonanschlüssen mittels eines Mehrfrequenzverfahrens automatisiert zu übermitteln, wobei Mittel zum Speichern einer ihr eindeutig zugeordneten Kennung zusammen mit einem der Kennung zugeordneten, geheimen Schlüssel zum Übertragen der Zugangsdaten mittels eines unidirektionalen, kryptographisch sicheren Authentifikationsverfahrens vorgesehen sind.

9. Vorrichtung nach Patentanspruch 8, **dadurch**
**gekennzeichnet,**
**daß** die Komponenten (1 - 7) einschließlich einer Antenne (8) und eines Tongebers (9) in einer Chipkarte, einer Armbanduhr oder in einem Taschenrechner in der Größenordnung einer Chipkarte integriert angeordnet sind.

10. Vorrichtung nach Patentanspruch 8 oder 9, **dadurch**
**gekennzeichnet,**
**daß** die Sicherheitslogik (5) PIN-geschützt ist und in die Vorrichtung voll integriert ist.

11. Vorrichtung nach Patentanspruch 8 oder 9, **dadurch gekennzeichnet,**
**daß** die PIN-geschützte Sicherheitslogik (5) in einem extern angeordneten Speicher, in Form einer einsteckbaren Chipkarte, eines Chipträgers oder dergleichen abgespeichert ist, die/der mit der verbesserten Vorrichtung (1 - 9) oder mit einem Telefon (11) bzw. einem Bankterminal lösbar bzw. kurzzeitig leicht verbindbar ist.

## Claims

1. Method for universal and secured access to the telephone network with mobile accessibility of the respective user, employing standard telephone lines, **characterized in that** the access takes place by means of a device that, by means of a multi-frequency method, transmits access data cryptographically secured by a unidirectional authentication algorithm to a telecommunications terminal on a standard telephone line, and **in that** the respective personal and secret key used for the authentication algorithm is kept safe within the device.

2. Method according to claim 1, **characterized in that** a device (1 - 9) for universal, cryptographically secured access to the telephone network (12) through an integrated radio paging receiver (3) is connected to a local, national, or international radio paging service by means of an internal processor control unit (7) and an integrated DTMF signal transmitter (4).

3. Method according to claim 1 or 2, **characterized in that** a callback from a device (1 - 9) that has been called by radio paging is initiated by a simple press of a button.

4. Method according to any one of claims 1 through 3, **characterized in that** the initiator of the radio paging is connected to a server, said server thereupon first breaks the connection to the initiator, then issues a radio page to the called device (1-9) and if the called subscriber answers within a predefined time window or time period, establishes a voice connection between the called device and the network access device associated with the initiator or the corresponding subscribers, with the costs for the conversation being allocated to the initiating subscriber.

5. Method according to one of claims 2 through 4, **characterized in that** the initiator of the radio paging is connected to a server, said server thereupon places the connection to the initiator on hold and issues a radio page to the called device (1 - 9), and **in that** the device (1 - 9) that has been called by radio paging calls the server back through the access as long as the initiating device maintains the connection to the server, the server connects the network access device of the initiator to the called device (1 - 9), and the initiator bears the connection costs.

6. Method according to claim 4, **characterized in that** the device (1 - 9) called by radio paging calls the server back through the access after the initiator has broken the connection to the server, but still within the predefined time window or time limit, the server connects the network access device of the initiator with the called device (1 - 9) and the initiator bears the connection costs.

7. Method according to any one of claims 1 through 6, **characterized in that** the device (1 - 9) called by radio paging calls the server back through the access after the initiator has broken the connection to the server and after the predefined time limit or time window has expired, the initiator, at his own expense, initiates through his network access device a message in a voice mailbox, which can later be listened to through the device (1-9) of the called subscriber.

8. Device for universal and secured access to the telephone network with mobile accessibility of the user for carrying out the method according to any one of claims 1 - 7, **characterized in that** a keyboard (1) for entering called numbers, a called number memory (6) and a display (2) are provided and are connected to a processor (7) for controlling the said components and for controlling a radio paging receiver (3), a security logic unit (5) and a signal transmitter (4) for data transmission by a multi-frequency method, for example DTMF, and **in that** this device is designed as a standalone unit that can be coupled to the microphone of a standard telephone handset in order to automatically transmit access data with a telephone network by means of a multi-frequency method using standard telephone lines, wherein means are provided for storing an identifier uniquely associated with said device together with a secret key associated with the identifier for transmitting the access data by means of a unidirectional cryptographically secured authentication method.

9. Device according to claim 8, **characterized in that** the components (1 - 7), including an antenna (8) and a tone transmitter (9), are arranged in an integrated manner in a chip card, wristwatch, or pocket computer approximately the size of a chip card.

10. Device according to claim 8 or 9, **characterized in that** the security logic unit (5) is PIN protected and is fully integrated in the device.

11. Device according to claim 8 or 9, **characterized in that** the PIN-protected security logic unit (5) is stored in an externally located memory in the form of an insertable chip card, a chip carrier or the like, which can be connected to the improved device (1 - 9) or to a telephone (11) or a bank terminal in such a manner as to be removable or easily connected for a brief period.

## Revendications

1. Procédé d'accès universel et sécurisé au réseau téléphonique associé à l'accessibilité en situation de mobilité de l'usager en utilisant des lignes téléphoniques standard,
**caractérisé en ce que**
l'accès s'effectue au moyen d'un dispositif qui transmet les données d'accès cryptographiquement sécurisée à l'aide d'un algorithme d'authentification unidirectionnel à un terminal de télécommunications sur une ligne téléphonique standard au moyen d'un procédé de signalisation multifréquence, et chaque clé personnelle et secrète utilisée pour l'algorithme d'authentification est conservée dans le dispositif.

2. Procédé selon la revendication 1, **caractérisé en ce**
**qu'**un dispositif (1 - 9) d'accès universel cryptographiquement sécurisé au réseau téléphonique (12) est relié, par l'intermédiaire d'un récepteur de radiomessagerie (3) intégré, à un service de radiomessagerie local, national ou international par l'intermédiaire d'une commande à processeur interne (7) et d'un générateur de signaux DTMF integré (4).

3. Procédé selon la revendication 1 ou 2, **caractérisé en ce**
**qu'**un dispositif (1 - 9) appelé par radiomessagerie déclenche un rappel sur simple action d'une touche.

4. Procédé selon l'une des revendications 1 à 3, **caractérisé en ce que**
l'initiateur de l'appel par radiomessagerie est relié à un serveur qui, dans un premier temps, interrompt la connexion avec l'initiateur, puis lance un appel par radiomessagerie au dispositif (1 - 9) appelé et établit une communication entre l'équipement appelé et l'équipement d'accès au réseau associé à l'initiateur ou les abonnés correspondants, lorsque l'abonné appelé répond dans une fenêtre ou dans un espace de temps prédéterminé, les frais de la communication étant imputés à l'abonné initiateur.

5. Procédé selon l'une des revendications 2 à 4, **caractérisé en ce que**
l'initiateur de l'appel par radiomessagerie est relié à un serveur qui met la communication avec l'initiateur en attente, puis lance un appel par radiomessagerie au dispositif (1 - 9) appelé, et le dispositif (1 - 9) appelé par radiomessagerie rappelle le serveur par l'intermédiaire de l'accès tant que le dispositif initiateur maintient la communiction avec le serveur, le serveur relie l'équipement d'accès au réseau de l'initiateur au dispositif (1 - 9) appelé et que l'initiateur prend en charge les frais de communication.

6. Procédé selon la revendication 4, **caractérisé en ce que**
le dispositif (1 - 9) appelé par radiomessagerie rappelle le serveur par l'intermédiaire de l'accès, **en ce que**, une fois que l'initiateur a mis fin à la communication avec le serveur, le serveur établit, toujours à l'intérieur de la fenêtre ou limite de temps prédéterminée, une communication entre l'équipement d'accès au réseau de l'initiateur et le dispositif (1 - 9) appelé et **en ce que** l'initiateur prend en charge les frais de communication.

7. Procédé selon l'une des revendications 1 à 6, **caractérisé en ce que**
le dispositif (1 - 9) appelé par radiomessagerie rappelle le serveur par l'intermédiaire de l'accès, une fois que l'initiateur a mis fin à la connexion avec le serveur et que la limite ou la fenêtre de temps est dépassée, l'initiateur dépose, à ses propres frais, un message dans une boîte vocale par l'intermédiaire de son équipement d'accès au réseau, le message pouvant être écouté par l'abonné appelé par l'intermédiaire du dispositif (1 - 9).

8. Dispositif d'accès universel et sécurisé au réseau téléphonique associé à l'accessibilité de l'usager en situation de mobilité pour la réalisation du procédé selon l'une des revendications 1 à 7, **caractérisé en ce qu'**un clavier (1) de saisie de numéros d'appel, une mémoire (6) de numéros d'appel et un affichage (2) sont disposés et reliés à un processeur (7) pour la commande desdits composants, d'un récepteur de radiomessagerie (3), d'une logique de sécurité (5) et d'un générateur de signaux (4) pour la transmission de données au moyen d'un procédé de signalisation multifréquence, tel que le DTMF, et **en ce qu'**il est conçu comme un équipement autonome apte à être couplé avec le microphone d'un combiné de téléphone normal afin de transmettre de manière automatisée des données d'accès à l'aide d'un réseau téléphonique en utilisant des lignes téléphoniques standard au moyen d'un procédé de signalisation multifréquence, des moyens étant prévus pour enregistrer un identifiant qui lui est associé de manière univoque ensemble avec une clé secrète associée à l'identifiant pour la transmission des données d'accès au moyen d'un procédé d'authentification unidirectionnel cryptographiquement sécurisé.

9. Dispositif selon la revendication 8, **caractérisé en ce que**
les composants (1 - 7), y compris une antenne (8) et un émetteur de son (9), sont disposés intégrés dans une carte à puce, une montre bracelet ou une calculatrice de poche de la taille d'une carte à puce.

10. Dispositif selon la revendication 8 ou 9, **caractérisé en ce que**
la logique de sécurité (5) est protégée par un code PIN et est entièrement intégrée dans le dispositif.

11. Dispositif selon la revendication 8 ou 9, **caractérisé en ce que**
la logique de sécurité (5) protégée par un code PIN est enregistrée dans une mémoire externe sous la forme d'une carte à puce enfichable, d'un support de carte à puce ou similaire, apte à être facilement relié(e) de manière amovible ou temporairement au dispositif (1 - 9) amélioré ou à un téléphone (11) ou à un terminal de banque.
